# EUROPÄISCHE PATENTSCHRIFT

(11) **EP 1 618 286 B1**
(45) Veröffentlichungstag und Bekanntmachung des Hinweises auf die Patenterteilung: **20.09.2017**
(21) Anmeldenummer: 04723976.9
(22) Anmeldetag: 29.03.2004
(51) Int. Cl.: F01D 5/00

(54) **VERFAHREN ZUR REPARATUR VON GASTURBINEN**
REPAIR METHOD OF GAS TURBINES
PROCEDE DE REPARATION DE TURBINES A GAZ

(30) Priorität: 27.04.2003 DE 10319019
(43) Veröffentlichungstag der Anmeldung: 25.01.2006
(73) Patentinhaber: MTU Aero Engines AG, 80995 München (DE)
(72) Erfinder: HANREICH, Klaus, 30900 Wedemark (DE)
(86) Internationale Anmeldenummer: PCT/DE2004/000656
(87) Internationale Veröffentlichungsnummer: WO 2004/097180

(56) Entgegenhaltungen:
- US-A- 5 193 272
- US-A- 5 285 572
- SAWYER ET AL: "Turbomachinery maintenance hanbook" 1980, TURBOMACHINERY INTERNATIONAL PUBLICATIONS , NORWALK, CONNECTICUT, USA , XP002294741 Seiten 5-40, Absatz OVERHAUL - Seiten 5-50
- BREMER C: "KOMPRESSOR-UND TURBINENSCHAUFELN AUTOMATISCH REPARIEREN" WERKSTATT UND BETRIEB, CARL HANSER VERLAG. MUNCHEN, DE, Bd. 129, Nr. 7/8, 1. August 1996 (1996-08-01), Seiten 672-674, XP000678763 ISSN: 0043-2792

## Beschreibung

Die Erfindung betrifft ein Verfahren zur Reparatur, von Gasturbinen, d.h. Flugzeugtriebwerken oder stationären Gasturbinen, nach dem Oberbegriff des Patentanspruchs 1.

Der Reparatur, von Gasturbinen, insbesondere Flugzeugtriebwerken, kommt bei der Ermittlung der direkten Betriebskosten eines Flugszeugs eine entscheidende Rolle zu. So sind in etwa 30 % der direkten Betriebskosten eines Flugzeugs den Flugzeugtriebwerken zuzuordnen, wobei in etwa ein Drittel der die Triebwerke betreffenden Betriebskosten auf die Instandhaltung der Ffugtriebwerke entfällt. Insofern machen die Kosten für die Instandhaltung von Flugtriebwerken in etwa 10 % der gesamten direkten Betriebskosten eines Flugzeugs aus. Hieraus folgt unmittelbar, dass eine effiziente und kostengünstige Instandhaltung bzw. Wartung und Reparatur von Flugzeugtriebwerken für Fluggesellschaften von entscheidender Bedeutung ist. Ähnliches gilt auch für stationäre Gasturbinen.

Bislang wurde bei der Instandhaltung bzw. Wartung von Gasturbinen, insbesondere Flugzeugtriebwerken, nach dem sogenannten Werkstattprinzip vorgegangen. Bei dem sogenannten Werkstattprinzip verbleibt die Gasturbine, insbesondere das Flugzeugtriebwerk, zumindest in Teilen an einer Position bzw. an einem Ort. Benötigtes Arbeitsmaterial, benötigte Arbeitswerkzeuge sowie benötigtes Arbeitspersonal werden zeitlich so an die Gasturbine bzw. das Flugzeugtriebwerk herangeführt, dass möglichst wenige Störungen auftreten und eine zugesagte Instandhaltungszeit der Gasturbine, insbesondere des Flugzeugtriebwerks, eingehalten werden kann.

Die Instandhaltung bzw. Wartung von Gasturbinen, insbesondere Flugzeugtriebwerken, nach dem sogenannten Werkstattprinzip verfügt jedoch über den Nachteil, dass die Instandhaltung keiner definierten Prozessstruktur folgt. Vielmehr werden Arbeiten an der Gasturbine bzw. am Flugzeugtriebwerk in nahezu beliebiger Reihenfolge durchgeführt, wodurch sich insbesondere dann, wenn gleichzeitig mehrere Gasturbinen bzw. Flugzeugtriebwerke gewartet werden, Störungen und Verzögerungen bei der Wartung desselben einstellen können. Eine Wartung nach dem sogenannten Werkstattprinzip verfügt demnach über die Nachteile, dass einerseits keine klare Prozessstruktur besteht und dass andererseits lange Zeiten für die Wartung bzw. Instandhaltung benötigt werden. Dies beeinträchtigt die Effizienz der Wartung von Gasturbinen, insbesondere Flugzeugtriebwerken.

In Sawyer et al., "Turbomachinery maintanance handbook", 1980, Turbomachinery International Publications, Norwalk, Conncticut, USA werden im Kapitel "Restoration and Replacement" Teile (z.B. Gehäuse) von Gasturbinen offenbart, die repariert werden (können). In diesem Zusammenhang werden auch teilweise konkretere Reparaturmaßnahmen angebeben (z.B. Reparaturschweißen von Rissen).

Aus der US 5,193,272 A ist eine Vorrichtung bekannt, die mehrere - in der D2 als Stationen bezeichnete - Bereiche aufweist, die in einem Behälter vorgesehen sind.

Die US 5,285,572 A beschäftigt sich mit konkreten Schritten, die zweckmäßiger Weise im Rahmen einer Schaufelreparatur vorgenommen werden sollen, sowie mit einer Sequenz-Bestimmung dieser Schritte.

Bremer, C.: "Kompressor- und Turbinenschaufeln automatisch reparieren", Werkstatt und Betrieb, Carl Hanser Verlag, München, DE Bd. 129, Nr. 7/8. 1. August 1996, Seiten 672-674 schlägt vor, aufgeschweißte Turbinen- oder Kompressorschaufeln in vier Schritten auf einer CNC-Maschine zu reparieren.

Hiervon ausgehend liegt der vorliegenden Erfindung das Problem zu Grunde, ein neuartiges Verfahren zur Reparatur, von Gasturbinen, insbesondere Flugzeugtriebwerken, bzw. von Modulen derselben zu schaffen.

Dieses Problem wird dadurch gelöst, dass das eingangs genannte Verfahren zur Reparatur, von Gasturbinen, insbesondere Flugzeugtriebwerken, durch die Merkmale des kennzeichnenden Teils des Patentanspruchs 1 weitergebildet ist.

Bei der Reparatur, von Gasturbinen, insbesondere Flugzeugtriebwerken, werden Gasturbinen, insbesondere Flugzeugtriebwerke, demontiert. Anschließend werden Module und/oder Baugruppen der Gasturbinen, insbesondere der Flugzeugtriebwerke, inspiziert und/oder repariert. Darauffolgend werden Gasturbinen, insbesondere Flugzeugtriebwerke, aus inspizierten und/oder reparierten und/oder neuen Modulen und/oder Baugruppen montiert. Erfindungsgemäß wird die Reparatur in mindestens zwei Reparaturschritte unterteilt wird, wobei die Module und/oder Baugruppen mindestens einer Gasturbine bzw. Flugzeugtriebwerks durch Reparaturstationen bewegt werden, um die Module und/oder Baugruppen der oder jeder Gasturbine zur Ausführung der Reparaturschritte in hierfür angepasste Reparaturstationen zu bewegen.

Das erfindungsgemäße Verfahren zur Reparatur von Gasturbinen, insbesondere Flugzeugtriebwerken, schlägt erstmals vor, die Reparatur von Gasturbinen, insbesondere Flugzeugtriebwerken, nach einem sogenannten Fließbandprinzip vorzunehmen. Es ist demnach eine grundlegende Erkenntnis der hier vorliegenden Erfindung, dass das Fließbandprinzip auch für Reparaturarbeiten geeignet ist. Mit der Erfindung wird das Vorurteil überwunden, dass das Fließbandprinzip nur bei der Neuproduktion von Gasturbinen, insbesondere Flugzeugtriebwerken, geeignet sei, jedoch nicht für die Reparatur derselben. Dieses Vorurteil aus dem Stand der Technik liegt darin begründet, dass bei der Neuproduktion aus Einzelteilen oder Rohstoffen mit einer definierten Beschaffenheit ein neuer Artikel entsteht, wohingegen bei der Reparatur ein Artikel mit unbekannter Beschaffenheit demontiert, inspiziert, repariert und darauffolgend montiert werden muss. Im Unterschied zur Neuproduktion sind bei der Reparatur von Gasturbinen, insbesondere Flugzeugtriebwerken, die erforderlichen Arbeitsschritte nicht stets gleich, sondern immer abhängig von der konkreten Beschaffenheit der zu reparierenden Gasturbine bzw. des Flugzeugtriebwerks. Die hier vorliegende Erfindung zeigt jedoch, dass auch bei der Reparatur von Gasturbinen, insbesondere Flugzeugtriebwerken, ein Fließbandprinzip erfolgreich eingesetzt werden kann. Das erfindungsgemäße Verfahren ermöglicht eine hohe Effizienz bei der Reparatur und eine kurze Wartungszeit. Das erfindungsgemäße Verfahren zur Reparatur von Gasturbinen, insbesondere Flugzeugtriebwerken, ist sehr flexibel.

Nach einer vorteilhaften Weiterbildung der Erfindung wird die Reparatur der Module und/oder Baugruppen in unterschiedlichen Reparaturlinien durchgeführt, wobei nach Inspektion der Module und/oder Baugruppen und/oder Einzelteile entscheiden wird, welcher Reparaturlinie ein zu reparierendes Modul und/oder Baugruppe zugeführt. Für die Entscheidung, welcher der Reparaturlinien ein Modul und/oder eine Baugruppe zugeführt wird, ist der Schwerpunkt der auszuführenden Reparaturarbeiten maßgeblich.

Vorzugsweise werden innerhalb einer Reparaturlinie hintereinander mehrere Reparaturschritte ausgeführt werden, wobei zur Ausführung der Reparaturschritte die Module und/oder Baugruppen in einem Takt, also diskontinuierlich, in angepasste Reparaturstationen bewegt werden.

Zusätzlich zu den Reparaturstationen der Reparaturlinien werden Zentralreparaturstationen vorgesehen, wobei den Zentralreparaturstationen Module und/oder Baugruppen aus unterschiedlichen Reparaturlinien zugeführt werden. Hierdurch wird eine hohe Prozessstabilität gewährleistet, da zeitintensive Arbeiten in Zentralreparaturstationen durchgeführt werden, die den zeitlichen Ablauf innerhalb der Reparaturlinien nicht beeinträchtigen.

Nach einer vorteilhaften Weiterbildung der Erfindung werden innerhalb der Reparaturlinien zumindest für einige der Reparaturschritte mehrere identische Reparaturstationen vorgesehen, so dass innerhalb einer Reparaturlinie gleichzeitig an unterschiedlichen Modulen und/oder Baugruppen gleiche Reparaturschritte durchgeführt werden können. Hierdurch kann der Takt der Reparaturlinien verkürzt und die Effizienz des Verfahrens gesteigert werden.

Bevorzugte Weiterbildungen der Erfindung ergeben sich aus den abhängigen Unteransprüchen und der nachfolgenden Beschreibung.

Ein Ausführungsbeispiel der Erfindung wird, ohne hierauf beschränkt zu sein, an Hand der Zeichnung näher erläutert. In der Zeichnung zeigt:
- Fig. 1:: ein Signalflussdiagramm zur Verdeutlichung des erfindungsgemäßen Verfahrens, umfassend Demontage eines Flugzeugtriebwerks, Reparatur von Modulen und/oder Baugruppen des Flugzeugtriebwerks, Montage des Flugzeugtriebwerks;
- Fig. 2:: ein detaillierteres Signalflussdiagramm eines Blocks des Signalflussdiagramms gemäß Fig. 1 zur Verdeutlichung der Reparatur des Flugzeugtriebwerks;
- Fig. 3:: ein Blockschaltbild einer konkreten Reparaturlinie; und
- Fig. 4:: einen stark schematisierten Querschnitt durch ein zu reparierendes Flugzeugtriebwerk.

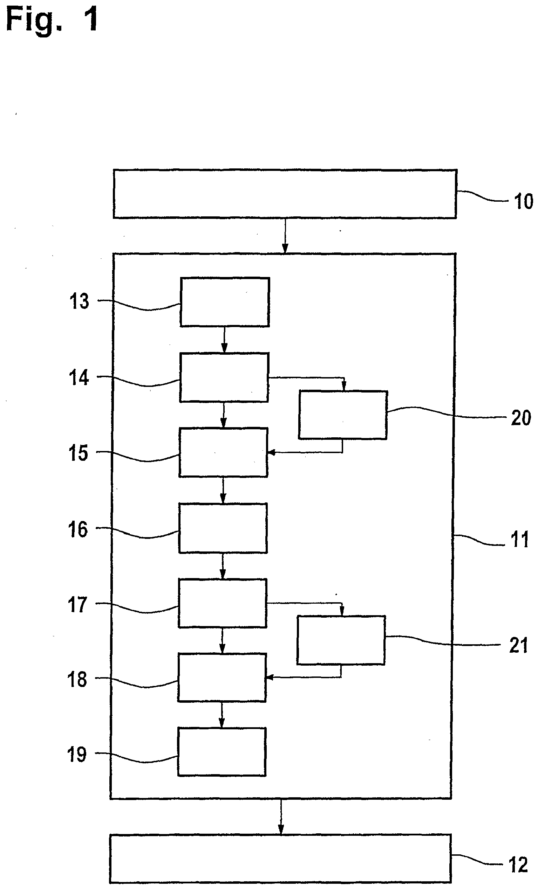

Anhand der Fig. 1 bis 4 wird das erfindungsgemäße Verfahren zur Reparatur von Gasturbinen am Beispiel eines Flugzeugtriebwerks in größerem Detail beschrieben.

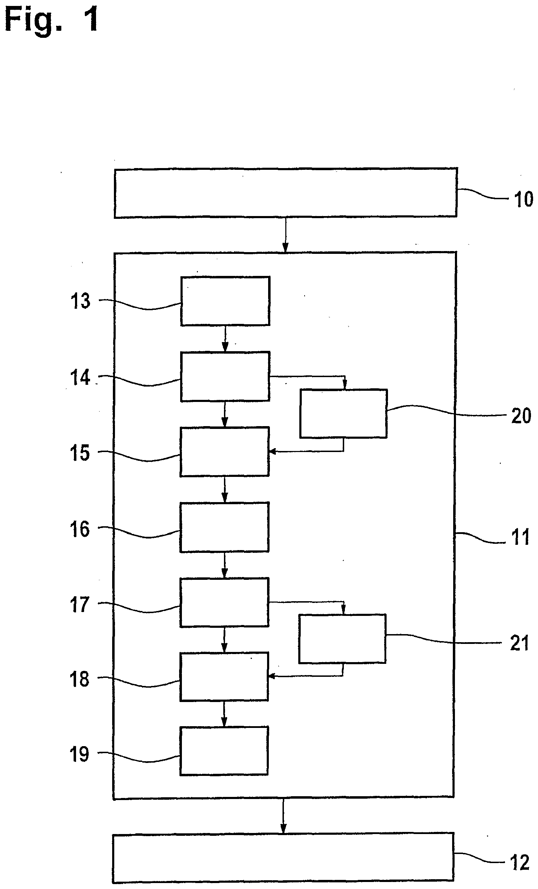

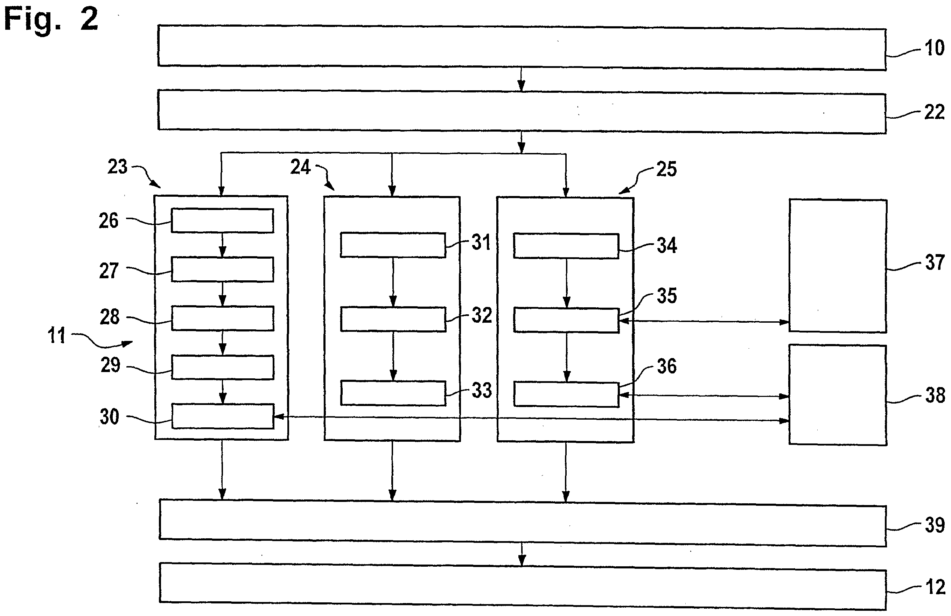

Fig. 1 zeigt ein stark schematisiertes Signalflussdiagramm bzw. Blockschaltbild des erfindungsgemäßen Verfahrens. So zeigt Fig. 1 die Demontage, Reparatur sowie anschließende Montage des Flugzeugtriebwerks. Fig. 2 zeigt ein detaillierteres Blockschaltbild betreffend die eigentliche Reparatur von Modulen und/oder Baugruppen eines Flugzeugtriebwerks, Fig. 3 zeigt ein detaillierteres Blockschaltbild einer konkreten Reparaturlinie.

Gemäß Fig. 1 wird in einem ersten Schritt 10 ein zu wartendes Flugzeugtriebwerk in Module und/oder Baugruppen zerlegt bzw. demontiert. Dem Schritt 10 ist vorzugsweise eine Reinigung des Flugzeugtriebwerks vorgeschaltet.

An die Demontage des Flugzeugtriebwerks gemäß Schritt 10 schließt sich ein Schritt 11 an, in welchem die Module und/oder Baugruppen des Flugzeugtriebwerks inspiziert und/oder repariert werden. Ergibt im Schritt 11 die Inspektion, dass ein Modul und/oder eine Baugruppe des Flugzeugtriebwerks unbeschädigt ist, so kann eine Reparatur desselben selbstverständlich entfallen.

Im Anschluss an die Inspektion und ggf. Reparatur gemäß Schritt 11 wird in einem Schritt 12 ein Flugzeugtriebwerk zusammengesetzt bzw. montiert. Bei der Montage des Flugzeugtriebwerks wird ein Flugzeugtriebwerk aus inspizierten und/oder reparierten und/oder neuen Modulen bzw. Baugruppen zusammengesetzt. Ergibt nämlich die Inspektion in Schritt 11, dass ein Modul bzw. eine Baugruppe bzw. ein Einzelteil des Flugzeugtriebwerks nicht mehr repariert werden kann, so wird dasselbe durch ein neues bzw. neuwertiges Modul bzw. eine Baugruppe ersetzt.

Die hier vorliegende Erfindung betrifft in erster Linie die Reparatur der Module bzw. Baugruppen von Flugzeugtriebwerken im Sinne des Schritts 11 und ist unabhängig von der Demontage und Montage.

Erfindungsgemäß wird die Reparatur in mindestens zwei Reparaturschritte unterteilt wird, wobei die Module und/oder Baugruppen mindestens eines Flugzeugtriebwerks durch Reparaturstationen bewegt werden, um die Module und/oder Baugruppen des oder jeden Flugzeugtriebwerks zur Ausführung der Reparaturschritte in hierfür angepasste Reparaturstationen zu bewegen. Die zu reparierenden Module und/oder Baugruppen verbleiben demnach nicht an einem Ort bzw. an einer Position, sondern sie werden vielmehr unter Veränderung des Orts durch unterschiedliche Reparaturstationen bewegt. Es liegt demnach im Sinne der Erfindung, für die Reparatur von Flugzeugtriebwerken erstmalig das sogenannte Fließbandprinzip einzusetzen.

Fig. 1 verdeutlicht bzw. visualisiert die Unterteilung der Reparatur gemäß Schritt 11 in unterschiedliche Reparaturschritte. Nachdem ein Flugzeugtriebwerk im Schritt 10 in Module bzw. Baugruppen zerlegt worden ist, wird ein zu reparierendes Modul bzw. Baugruppe nachfolgend Reparaturschritten 13, 14, 15, 16, 17, 18 und 19 unterzogen. Zur Ausführung der Reparaturschritte 13 bis 19 wird das Modul bzw. die Baugruppe in einem bestimmten Takt durch hintereinander angeordnete Reparaturstationen bewegt. Jede der Reparaturstationen ist an den auszuführenden Reparaturschritt derart angepasst, dass in der Reparaturstation benötigte Arbeitswerkzeuge sowie Arbeitsmaterialien bereitgehalten werden.

Beim Reparaturschritt 13 handelt es sich im gezeigten Ausführungsbeispiel der Fig. 1 um einen Reinigungsschritt des zu reparierenden Moduls bzw. der Baugruppe bzw. des Einzelteils. Im Reparaturschritt 14 findet eine Rissprüfung und im Reparaturschritt 15 eine Schweißbearbeitung des zu reparierenden Moduls bzw. der Baugruppe statt. In Reparaturschritt 16 werden Schleifarbeiten, im Reparaturschritt 17 Montagearbeiten und im Reparaturschritt 18 Bohrungen am zu reparierenden Modul bzw. der Baugruppe bzw. dem Einzelteil vorgenommen. Im Reparaturschritt 19 erfolgt im gezeigten Ausführungsbeispiel eine abschließende Prüfung des reparierten Moduls bzw. der Baugruppe bzw. des Einzelteils.

Die einzelnen Reparaturschritte 13 bis 19 sowie die hierfür vorgesehenen Reparaturstationen definieren eine klare Prozessstruktur und bilden so eine Reparaturlinie. Die Reihenfolge der auszuführenden Reparaturschritte ist klar definiert und vorgegeben. Kreuzungen sowie Überschneidungen in der Prozesskette bzw. Reparaturlinie werden mithilfe des erfindungsgemäßen Verfahrens vermieden.

Es liegt im Sinne der Erfindung die Bewegung der zu reparierenden Module und/oder Baugruppen durch eine Reparaturlinie gemäß dem Block 11, die durch die Reparaturschritte 13 bis 19 definierte wird, in einem vorgegebenen Takt zu bewegen. Der Takt ist dabei vorzugsweise an die in der jeweiligen Reparaturlinie durchzuführenden Reparaturschritte angepasst.

Fig. 1 kann entnommen werden, dass neben den in einer Reparaturlinie zusammengefassten Reparaturschritten 13 bis 19, die in hintereinander angeordneten Reparaturstationen durchgeführt werden, außerhalb der Reparaturlinie Zentralreparaturschritte 20, 21 in hierfür vorgesehenen Zentralreparaturstationen durchgeführt werden können. In den Zentralreparaturstationen werden vorzugsweise solche Zentralreparaturschritte durchgeführt, die zeitintensiv sind und den.Takt einer Reparaturlinie nicht bestimmen sollen. Es kann sich hierbei zum Beispiel um Wärmebehandlungsprozesse, Waschprozesse oder Galvanisierungsprozesse handeln. Unabhängig von der Reparaturlinie und dem Takt einer Reparaturlinie werden diese Zentralreparaturschritte 20, 21 von der Reparaturlinie entkoppelt durchgeführt. Dies erhöht die Stabilität des gesamten Reparaturverfahrens.

Fig. 2 verdeutlicht das erfindungsgemäße Verfahren in größerem Detail. So zeigt Fig. 2 wiederum den Schritt 10 der Demontage von Flugzeugtriebwerken in Module und/oder Baugruppen. Wie bereits erwähnt, ist dem Schritt 10 eine Reinigung der Flugzeugtriebwerke vorgeschaltet, wobei hier die Flugzeugtriebwerke als Einheit gereinigt werden.

Im Anschluss an den Schritt 10 und vor der eigentlichen Reparatur im Sinne des Schritts 11 ist ein Schritt 22 vorgesehen, in dem die Module und/oder Baugruppen und/oder Einzelteile einer Inspektion unterzogen werden. Abhängig von dieser Inspektion der zu reparierenden Module und/oder Baugruppen und/oder Einzelteile werden dieselben einer der im Ausführungsbeispiel gemäß Fig. 2 gezeigten Reparaturlinien 23, 24 oder 25 zugeführt. Die Entscheidung, welcher der Reparaturlinien 23, 24 oder 25 ein zu reparierendes Modul bzw. eine Baugruppe bzw. ein Einzelteil zugeführt wird, hängt vom Schwerpunkt der durchzuführenden Reparaturarbeiten ab.

So handelt es sich im Ausführungsbeispiel gemäß Fig. 2 bei der Reparaturlinie 23 um eine beschichtungsintensive Reparaturlinie, bei der Reparaturlinie 24 um eine schweißintensive Reparaturlinie und bei der Reparaturlinie 25 um eine nicht-schweißintensive Reparaturlinie. Zusätzlich zu den hier exemplarisch aufgeführten Reparaturlinien können selbstverständlich weitere Reparaturlinien, so zum Beispiel eine Reparaturlinie für Lüfter-Module oder Fan-Case-Module bzw. Baugruppen derselben, eine Reparaturlinie für Verdichter oder eine Reparaturlinie für gering beschädigte Module bzw. Baugruppen vorgesehen sein.

Jede der Reparaturlinien 23, 24 und 25 umfasst mehrere hintereinander auszuführende Reparaturschritte. Bei der Reparaturlinie 23 sind insgesamt fünf Reparaturschritte 26, 27, 28, 29 und 30 hintereinander geschaltet. Bei der Reparaturlinie 24 sowie bei der Reparaturlinie 25 sind drei Reparaturschritte 31, 32 und 33 bzw. 34, 35 und 36 hintereinander geschaltet. Die Anzahl der Reparaturschritte ist rein exemplarischer Natur und kann selbstverständlich variiert werden.

Zur Ausführung der jeweiligen Reparaturschritte werden die zu reparierenden Module bzw. Baugruppen bzw. Einzelteile in den jeweiligen Reparaturlinien 23, 24 sowie 25 durch hintereinander angeordnete Reparaturstationen bewegt. Jede der Reparaturlinien arbeitet nach einem vorbestimmten Takt, wobei die Takte der einzelnen Reparaturlinien voneinander abweichen können.

Fig. 2 zeigt auch wiederum zwei Zentralreparaturschritte 37 und 38, die außerhalb der jeweiligen Reparaturlinien 23, 24 und 25 durchgeführt werden. Für jeden Zentralreparaturschritt 37, 38 ist wiederum eine Zentralreparaturstation vorgesehen. Den Zentralreparaturstationen können aus allen Reparaturlinien 23, 24 und 25 zu reparierende Module und/oder Baugruppen und/oder Einzelteile zugeführt werden. Dies hängt selbstverständlich davon ab, ob die in der jeweiligen Zentralreparaturstation durchzuführenden Zentralreparaturschritte für ein konkret zu reparierendes Bauteil von Bedeutung sind. Nachdem ein zu reparierendes Modul bzw. eine Baugruppe bzw. ein Einzelteil aus einer Reparaturlinie in eine Zentralreparaturstation überführt wurde, wird dasselbe Bauteil nach Vollendung des entsprechenden Zentralreparaturschritts wieder der Reparaturlinie zugeführt, aus derselbe ausgeschleust worden ist.

Nach durchgeführter Reparatur werden die Module und/oder Baugruppen im Sinne eines Schritts 39 einer abschließenden Inspektion unterzogen, ob die Reparatur erfolgreich durchgeführt worden ist.

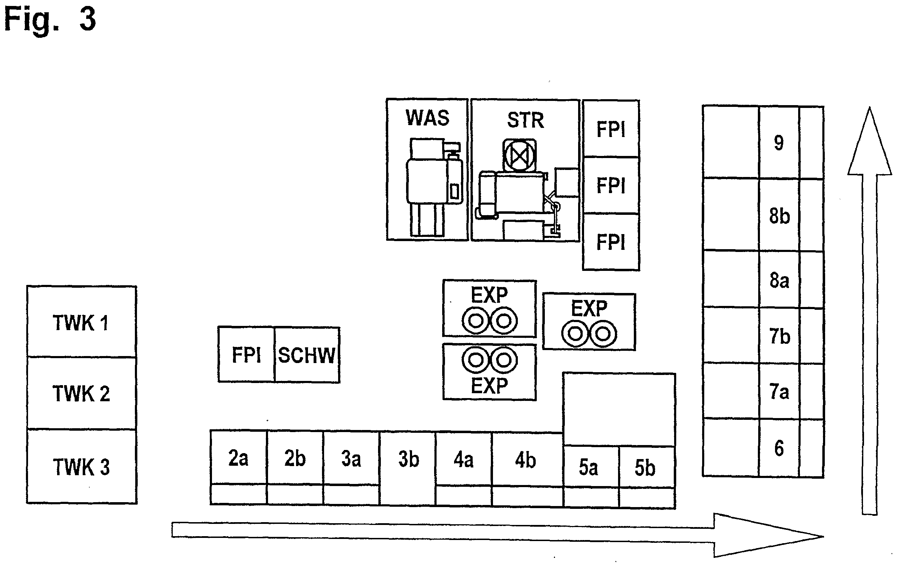

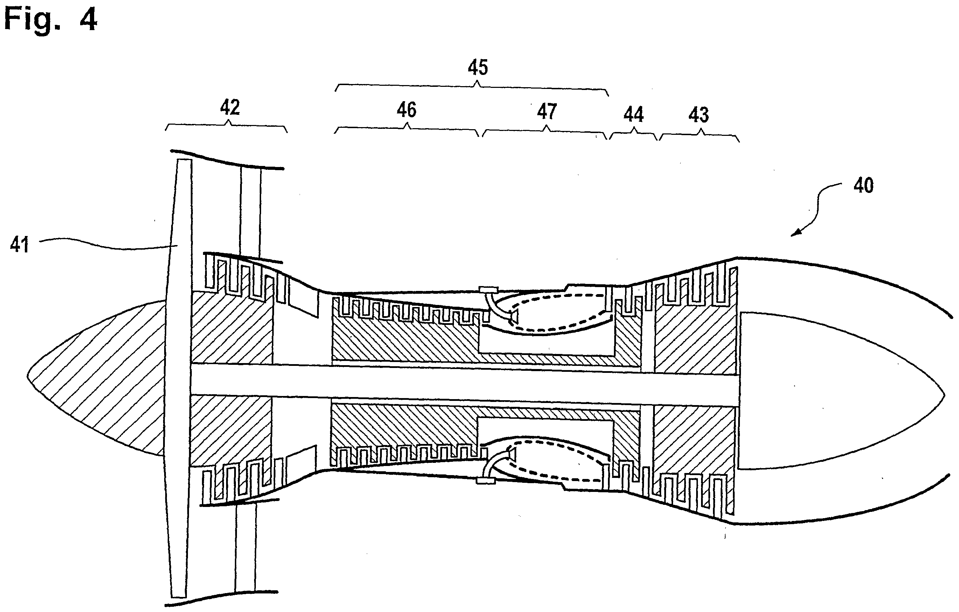

An dieser Stelle sei darauf hingewiesen, dass mit dem erfindungsgemäßen Verfahren Module und/oder Baugruppen und/oder Einzelteile unterschiedlichster Typen von Flugzeugtriebwerken nach dem Fließbandprinzip repariert werden können. Die Flugzeugtriebwerke, deren Module mit dem erfindungsgemäßen Verfahren gewartet bzw. repariert werden können, sind Serientriebwerke und dem hier angesprochenen Fachmann geläufig. Fig. 4 zeigt exemplarisch und stark schematisiert Module bzw. Baugruppen eines zu reparierenden Flugzeugtriebwerks 40. Das Flugzeugtriebwerk 40 gemäß Fig. 4 verfügt über ein Häuptlüfterrad-Modul 41, ein Fan-Case-Modul bzw. Lüfter-Modul 42, ein Niederdruckturbinen-Modul 43, ein Hochdruckturbinen-Modul 44 und ein Hockdruckverdichter-Modul 45 umfassend die Baugruppen Hochdruckverdichter 46 und Brennkammer 47.

Bedingt durch die Strukturierung der Reparatur in Reparaturlinien, wobei innerhalb der Reparaturlinien die zu reparierenden Module und/oder Baugruppen Schritt für Schritt durch hintereinander angeordnete Reparaturstationen bewegt werden, ergibt sich eine klare Prozessstruktur. Die zur Wartung bzw. Reparatur eines Flugzeugtriebwerks benötigten Zeiten sind besser planbar. Fremdteile können in das erfindungsgemäße Verfahren eingeschleust werden. Das erfindungsgemäße Verfahren arbeitet nach einem "first come, first serve" Prinzip. Das bedeutet, dass ein Bauteil, welches zuerst in den Bereich einer konkreten Reparaturstation bzw. Zentralreparaturstation bewegt wird, auch zuerst bearbeitet wird. Da die Anzahl der Reparaturschritte für jedes zu reparierende Modul bzw. Baugruppe abhängig vom Zustand desselben variieren kann, ergibt sich hieraus, dass selbstverständlich ein Bauteil, welches nach einem anderen Bauteil einer Reparaturlinie zugeführt worden ist, vor diesem Bauteil die Reparaturlinie wieder verlassen kann. Das erfindungsgemäße Verfahren arbeitet demnach nicht nach einem "first in, first out" Prinzip. Hierdurch wird die Effektivität der Reparatur von Flugzeugtriebwerken deutlich verbessert.

Fig. 3 zeigt ein Blockschaltbild einer konkreten Reparaturlinie. So sind im Ausführungsbeispiel der Fig. 3 insgesamt vierzehn Reparaturstationen 2a bis 9 hintereinander angeordnet, wobei zu reparierende Module und/oder Baugruppen von Flugzeugtriebwerken in Richtung der Pfeile durch die Reparaturstationen 2a bis 9 bewegt werden und zwar abhängig davon, ob ein konkret zu reparierendes Modul bzw. Baugruppe bzw. Einzelteil dem in der jeweiligen Reparaturstation durchzuführenden Reparaturschritt unterzogen werden muss. Ein zu reparierendes Modul bzw. Baugruppe bzw. Einzelteil muss demnach nicht alle Reparaturstationen durchlaufen.

Der Nomenklatur der Reparaturstationen gemäß Fig. 3 kann entnommen werden, dass lediglich acht der vierzehn Reparaturstationen 2a bis 9 der Durchführung unterschiedlicher Reparaturschritte dienen. So dienen die Reparaturstationen 2a, 2b sowie 3a, 3b sowie 4a, 4b usw. jeweils der Durchführung eines identischen Reparaturschritts. In einer Reparaturlinie sind demnach für einige der Reparaturschritte mehrere identische Reparaturstationen vorgesehen. Innerhalb einer Reparaturlinie können demnach gleichzeitig an unterschiedlichen Modulen und/oder Baugruppen unterschiedlicher Flugzeugtriebwerke gleiche Reparaturschritte durchgeführt werden. Hierdurch wird sichergestellt, dass der Takt in der Reparaturlinie auch dann eingehalten werden kann, wenn für einige der Reparaturschritte eine längere Bearbeitungszeit erforderlich sein sollte.

Neben den Reparaturstationen 2a bis 9 zeigt Fig. 3 weitere Arbeitsstationen. Die Arbeitsstationen mit der Bezeichnung FPI dienen einer optischen Rissprüfung der zu reparierenden Module und/oder Baugruppen. Bei der Arbeitsstation mit der Bezeichnung STR handelt es sich um eine Strahlanlage, in der eine Oberflächenbearbeitung durchgeführt werden kann. Die Arbeitsstationen, die mit EXP bezeichnet sind, dienen einer Durchmesserdehnung zu bearbeitender Module und/oder Baugruppen. Die im linken Bereich der Fig. 3 gezeigten Stationen, die mit TWK1, TWK2 sowie TWK3 bezeichnet sind, dienen der Durchführung eventuell erforderlicher Demontagearbeiten an Modulen und/oder Baugruppen der unterschiedlichen Typen von Flugzeugtriebwerken. Weiterhin zeigt Fig. 3 eine Waschstation zur Reinigung von Modulen und/oder Baugruppen, die mit WAS bezeichnet ist. Weiterhin kann eine nicht gezeigte Einlastzone als Puffer für Module bzw. Baugruppen bzw. Einzelteile, die der Reparaturlinie zugeführt werden, vorhanden sein. Auch können Bereiche mit Stationen zur Durchführung von Schweiß-, Bohr-, Montage-, Mess- oder Einstellarbeiten vorhanden sein. Eine Schweißstation ist mit SCHW bezeichnet.

Mithilfe der Erfindung wird erstmals vorgeschlagen, bei der Reparatur bzw. Wartung bzw. Instandhaltung von Flugzeugtriebwerken ein sogenanntes Fließbandprinzip einzusetzen. Damit wird das aus dem Stand der Technik bekannte Vorurteil überwunden, dass sich ein Fließbandprozess für Wartungsarbeiten bzw. Reparaturarbeiten nicht eignet.

## Patentansprüche

1. Verfahren zur Reparatur von Gasturbinen, insbesondere Flugzeugtriebwerken, wobei Module und/oder Baugruppen der Gasturbinen, insbesondere Flugzeugtriebwerke, inspiziert und/oder repariert werden, **dadurch gekennzeichnet, dass** die Reparatur in mindestens zwei Reparaturschritte unterteilt wird, wobei zu reparierende Module und/oder Baugruppen mindestens einer Gasturbine durch Reparaturstationen bewegt werden, um die Module und/oder Baugruppen der oder jeder Gasturbine zur Ausführung der Reparaturschritte in hierfür angepasste Reparaturstationen zu bewegen, so dass die Reparatur der Gasturbinen nach dem Fließbandprinzip vorgenommen wird.

2. Verfahren nach Anspruch 1, **dadurch gekennzeichnet, dass** die Reparatur der Module und/oder Baugruppen in unterschiedlichen Reparaturlinien durchgeführt wird, wobei nach Inspektion der Module und/oder Baugruppen entscheiden wird, welcher Reparaturlinie ein zu reparierendes Modul und/oder Baugruppe zugeführt wird.

3. Verfahren nach Anspruch 1 oder 2, **dadurch gekennzeichnet, dass** die Reparatur der Module und/oder Baugruppen und/oder Einzelteile in jeder der Reparaturlinien in mindestens zwei Reparaturschritte unterteilt wird.

4. Verfahren nach Anspruch 2 oder 3, **dadurch gekennzeichnet, dass** als Reparaturlinien eine beschichtungsintensive Reparaturlinie und/oder eine schweißintensive Reparaturlinie und/oder eine nicht-schweißintensive Reparaturlinie bereitgestellt werden.

5. Verfahren nach einem oder mehreren der Ansprüche 1 bis 4, **dadurch gekennzeichnet, dass** Module und/oder Baugruppen von Gasturbinen, insbesondere Flugzeugtriebwerken, diskontinuierlich, nämlich in einem Takt, durch die Reparaturstationen bzw. die Reparaturlinien bewegt werden.

6. Verfahren nach einem oder mehreren der Ansprüche 1 bis 5, **dadurch gekennzeichnet, dass** innerhalb einer Reparaturlinie hintereinander mehrere Reparaturschritte ausgeführt werden, wobei zur Ausführung der Reparaturschritte die Module und/oder Baugruppen in angepasste Reparaturstationen bewegt werden, wobei zumindest für einige der Reparaturschritte mehrere identische Reparaturstationen vorgesehen werden, so dass innerhalb einer Reparaturlinie gleichzeitig an unterschiedlichen Modulen und/oder Baugruppen gleiche Reparaturschritte durchgeführt werden können.

7. Verfahren nach einem oder mehreren der Ansprüche 1 bis 6, **dadurch gekennzeichnet, dass** zusätzlich zu den Reparaturstationen der Reparaturlinien Zentralreparaturstationen vorgesehen werden, wobei den Zentralreparaturstationen Module und/oder Baugruppen aus unterschiedlichen Reparaturlinien zugeführt werden.

8. Verfahren nach Anspruch 7, **dadurch gekennzeichnet, dass** als Zentralreparaturstationen eine Wärmebehandlungsstation und/oder Waschstation und/oder Galvanisierungsstation bereitgestellt werden.

9. Verfahren nach einem oder mehreren der Ansprüche 1 bis 8, **dadurch gekennzeichnet, dass** das nach der Reparatur die Module und/oder Baugruppen inspiziert werden.

10. Verfahren nach einem oder mehreren der Ansprüche 1 bis 9, **dadurch gekennzeichnet, dass** vor der Reparatur die Gasturbinen, insbesondere Flugzeugtriebwerke, in Module und/oder Baugruppen demontiert werden.

11. Verfahren nach einem oder mehreren der Ansprüche 1 bis 10, **dadurch gekennzeichnet, dass** vor der Demontage die Gasturbinen, insbesondere die Flugzeugtriebwerke, als Einheit vorgereinigt werden, und dass vorzugsweise die Module und/oder Baugruppen vor der Reparatur nachgereinigt werden.

12. Verfahren nach einem oder mehreren der Ansprüche 1 bis 11, **dadurch gekennzeichnet, dass** nach der Reparatur Gasturbinen, insbesondere Flugzeugtriebwerke, aus inspizierten und/oder reparierten und/oder neuen Modulen und/oder Baugruppen montiert werden.

## Claims

1. A method for repairing gas turbines, in particular aircraft engines, modules and/or assemblies of the gas turbines, in particular aircraft engines, being inspected and/or repaired, **characterized in that** the repair is subdivided into at least two repair steps, modules and/or assemblies to be repaired of at least one gas turbine being moved through repair stations to move the modules and/or assemblies of the or each gas turbine to repair stations adapted for this purpose for carrying out the repair steps, so that the repair of the gas turbines is carried out according to the assembly line concept.

2. The method according to claim 1, **characterized in that** the modules and/or assemblies are repaired in different repair lines, a decision on the repair line to which a module and/or assembly to be repaired is being passed being made after the modules and/or assemblies have been inspected.

3. The method according to claim 1 or 2, **characterized in that** the repair of the modules and/or assemblies and/or individual parts in each of the repair lines is subdivided into at least two repair steps.

4. The method according to claim 2 or 3, **characterized in that** at least a coating-intensive repair line and/or a welding-intensive repair line and a non-welding-intensive repair line are provided as repair lines,

5. The method according to one or more of claims 1 to 4, **characterized in that** modules and/or assemblies of gas turbines, in particular aircraft engines, are moved discontinuously, which is to say on a cycle, through the repair stations or the repair lines

6. The method according to one or more of claims 1 to 5, **characterized in that** multiple repair steps are carried out in succession within one repair line, the modules and/or assemblies being moved to adapted repair stations for carrying out the repair steps, a plurality of identical repair stations being provided for at least some of the repair steps, so that identical repair steps can be carried out at the same time on different modules and/or assemblies within one repair line.

7. The method according to one or more of claims 1 to 6, **characterized in that**, in addition to the repair stations of the repair lines, central repair stations are provided, modules and/or assemblies from different repair lines being passed to the central repair stations.

8. The method according to claim 7, **characterized in that** a heat treatment station and/or a washing station and/or an electroplating station are provided as central repair stations.

9. The method according to one or more of claims 1 to 8, **characterized in that** the modules and/or assemblies are inspected after repair.

10. The method according to one or more of claims 1 to 9, **characterized in that** the gas turbines, in particular aircraft engines, are disassembled into modules and/or assemblies prior to repair.

11. The method according to one or more of claims 1 to 10, **characterized in that**, prior to being disassembled, the gas turbines, in particular the aircraft engines, are precleaned as a unit, and the modules and/or assemblies are preferably cleaned again prior to repair.

12. The method according to one or more of claims 1 to 11, **characterized in that** gas turbines, in particular aircraft engines, are assembled from inspected and/or repaired and/or new modules and/or assemblies after repair.

## Revendications

1. Procédé de réparation de turbines à gaz, en particulier de groupes motopropulseurs d'avions, dans lequel des modules et/ou des sous-groupes des turbines à gaz, en particulier des groupes motopropulseurs d'avions, sont inspectés et/ou réparés, **caractérisé en ce que** la réparation se subdivise en au moins deux étapes de réparation, dans lequel les modules et/ou les sous-groupes à réparer d'au moins une turbine à gaz sont déplacés à travers des stations de réparation pour déplacer les modules et/ou les sous-groupes de la ou de chaque turbine à gaz afin de réaliser les étapes de réparation dans des station de réparation prévues à cet effet de sorte que la réparation des turbines à gaz soit effectuée selon le principe d'une chaîne de montage.

2. Procédé selon la revendication 1, **caractérisé en ce que** la réparation des modules et/ou des sous-groupes est réalisée dans différentes chaînes de réparation, dans lequel, après l'inspection des modules et/ou des sous-groupes, on décide à quelle chaîne de réparation un module et/ou un sous-groupe à réparer est acheminé.

3. Procédé selon la revendication 1 ou 2, **caractérisé en ce que** la réparation des modules et/ou des sous-groupes et/ou des pièces Individuelles dans chacune des chaînes de réparation est subdivisée en au moins deux étapes de réparation.

4. Procédé selon la revendication 2 ou 3, **caractérisé en ce que** l'on met en oeuvre comme chaînes de réparation une chaîne de réparation centrée de manière intensive sur les revêtements et/ou une chaîne de réparation centrée de manière intensive sur la soudure et/ou une chaîne de réparation non centrée de manière intensive sur la soudure.

5. Procédé selon une ou plusieurs des revendications 1 à 4, **caractérisé en ce que** les modules et/ou les sous-groupes de turbines à gaz, en particulier de groupes motopropulseurs d'avions, sont déplacés en discontinu, à savoir en cadence, à travers les stations de réparation ou les chaînes de réparation.

6. Procédé selon une ou plusieurs des revendications 1 à 5, **caractérisé en ce que**, au sein d'une chaîne de réparation, plusieurs étapes de réparation sont effectuées l'une derrière l'autre, dans lequel, pour effectuer les étapes de réparation, les modules et/ou les sous-groupes sont déplacés dans des stations de réparation prévues à cet effet, dans lequel, au moins pour certaines des étapes de réparation, il est prévu plusieurs stations de réparation identiques de sorte qu'au sein d'une chaîne de réparation puissent être effectuées simultanément des étapes de réparation identiques sur différents modules et/ou sous-groupes.

7. Procédé selon une ou plusieurs des revendications 1 à 6, **caractérisé en ce que**, en plus des stations de réparation des chaînes de réparation, il est prévu des stations de réparation centrales, dans lequel des modules et/ou des sous-groupes sont acheminés de différentes chaînes de réparation aux stations de réparation centrales.

8. Procédé selon la revendication 7, **caractérisé en ce que** l'on met en oeuvre comme stations de réparation centrales une station de traitement à la chaleur et/ou une station de lavage et/ou une station de galvanisation.

9. Procédé selon une ou plusieurs des revendications 1 à 8, **caractérisé en ce que** les modules et/ou les sous-groupes sont inspectés après la réparation.

10. Procédé selon une ou plusieurs des revendications 1 à 9, **caractérisé en ce que**, avant la réparation, les turbines à gaz, en particulier les groupes motopropulseurs d'avions, sont démontés en modules et/ou en sous-groupes.

11. Procédé selon une ou plusieurs des revendications 1 à 10, **caractérisé en ce que**, avant le démontage, les turbines à gaz, en particulier les groupes motopropulseurs d'avions, sont pré-nettoyés dans leur ensemble et, de préférence, les modules et/ou les sous-groupes sont encore nettoyés avant la réparation.

12. Procédé selon une ou plusieurs des revendications 1 à 11, **caractérisé en ce que**, après la réparation, les turbines à gaz, en particulier les groupes motopropulseurs d'avions, sont montés à partir de modules et/ou de sous-groupes inspectés et/ou réparés et/ou nouveaux.
